Europäisches Patentamt

European Patent Office

Office européen des brevets

(11) Publication number: 0 426 495 A2

## EUROPEAN PATENT APPLICATION

(21) Application number: 90312040.0

(22) Date of filing: 02.11.90

(51) Int. Cl.⁵: H04N 1/46, H04N 1/04, H04N 1/12, H04N 1/387

(30) Priority: 03.11.89 US 431506

(43) Date of publication of application:
08.05.91 Bulletin 91/19

(84) Designated Contracting States:
DE FR GB

(71) Applicant: AMHERST TECHNOLOGIES, INC.
330 East 75th Street, Suite 35c
New York, New York 10021(US)

(72) Inventor: Kennet, Robert H.
4 Valencia Drive
Nashua, New Hampshire, 03031(US)
Inventor: Herod, Franklyn J., Jr.
24 Campbell Road
Bedford, New Hampshire, 03102(US)

(74) Representative: Heath, Derek James et al
BROMHEAD & CO. 19 Buckingham Street
London WC2N 6EF(GB)

(54) Fluid deposition system for producing processed color images.

(57) The invention is embodied in a system which includes a color video camera, a color monitor, a central processing unit, and a printer. The printer includes a specially designed printhead assembly. The printhead assembly includes three independent cartridge support stations, and an optical reader support station. Each of the cartridge support stations is designed to accept a thermal ink jet cartridge. The cartridges are held by a cartridge frame which is designed to maintain close tolerance in the relative positions of the cartridges. The printhead assembly rides along a rail parallel to substrate support rollers.

An optical reader is used to read a U.P.C. label which has image size and position information built into the U.P.C. code. While the system is specifically designed to be used in printing images on a Mylar® balloon, the system may be used to deposit a wide variety of liquids with a high degree of precision and repeatability. In the particular application shown, the cartridges each contain one of the primary colors of yellow, magenta and cyan so that the system can be used to produce processed color images.

Fig.1.

EP 0 426 495 A2

# FLUID DEPOSITION SYSTEM FOR PRODUCING PROCESSED COLOR IMAGES

## BACKGROUND AND SUMMARY OF THE INVENTION

The present invention relates to a system for depositing fluids in a particular sequence and, in particular, a method and assembly for printing processed color images on substrates such as polyester sheets, such as Mylar® balloons.

Processed colors are those which are created by printing different layers of colors using combinations of the basic colors of yellow, magenta, and cyan. Attempts to form processed color images on flexible substrates such as sheets and fabric have included off-set and silk-screen printing techniques. However, these techniques are relatively slow, expensive and inefficient. In addition, these techniques require the use of trained personnel and cumbersome equipment.

A recent attempt to simplify and modernize the creation of color images is the Hewlitt-Packard 3-Color Thermal Ink Jet System, known as the PaintJet® printer. The PaintJet® system offers the flexibility and quiet operation of thermal ink jet printing. However, the PaintJet® cartridge has combined three separate color ink reservoirs in a single cartridge. This means that if one of the reservoirs is depleted, or encounters a problem, the entire cartridge becomes unusable. In addition, the combined color cartridge of the PaintJet® system is substantially more complex than a single reservoir cartridge.

The problem of producing color images on sheets such as Mylar® balloons is particularly difficult because of the slippery nature of the material state. The uninflated balloons are very difficult to handle. In addition, the surface characteristics of Mylar® sheets are such that printing a clear and colorful image usually requires complex printing techniques. Thus, the printing of balloons "to order" has been unavailable.

An object of the present invention is to provide a simple and effective system for depositing liquids in a particular sequence.

A further object of the invention is to provide a full processed color printing system which is simple and reliable.

Another object of the invention is to provide a processed color printing system which is usable to print on unusual substrates, such as polyester film.

Yet another object of the invention is to provide a reliable printhead assembly, which ensures the dimensional stability of a series of individual ink cartridges.

Still another object of the invention is to provide a system for instantly converting a live image to a processed color image on unusual substrates.

A further object of the invention is to provide a system for correctly positioning an image on a sheet.

Another object of the invention is to provide a substrate which is marked with information which will facilitate the correct placement of an image on the substrate.

These and other objects of the invention are achieved with a system which includes a liquid deposition device usable as a printer. The system includes a high resolution color video camera, a high resolution color monitor, a computer, a color image work station, and a printer capable of receiving and handling two layers of polyester film which have been combined to form a balloon. The printer is connected to a computer with a video monitor which has received and fixed an image fed to it by a video camera. The camera and computer are both capable of receiving and transmitting color images. The printer is equipped with a printhead assembly which carries three ink jet cartridges. The cartridges are held in a rigid frame in order to insure that the cartridges are held a predetermined distance apart, and that those distances are maintained to tight tolerances. Similarly, the frame is mounted on a carriage base which rides on a rail. The printer includes a printhead assembly having a carriage support frame and a plurality of thermal ink jet support stations. The carriage support frame is a rigid machined aluminum and plastic device which firmly holds a plurality of thermal ink jet cartridges in place. The printer includes a feed mechanism which is a twin roller design that transports the substrate through the printing station. The mechanism incrementally feeds the substrate line by line in a smooth unwrinkled state in front of the print-head.

## BRIEF DESCRIPTION OF THE DRAWINGS

Figure 1 is a schematic diagram of a camera, monitor, computer and printer in accordance with the present invention.

Figure 2 is a schematic view of a substrate in accordance with the present invention.

Figure 3 is a perspective view of a printer made in accordance with the present invention.

Figure 4 is a top plan view of the printhead assembly of the present assembly.

Figure 5 is a partial sectional view taken along lines 5-of Figure 4.

Figure 6 is an end view of the inside of the printer shown in Figure 1.

Figure 7 is a perspective view of the rollers of the printer with a balloon being fed therethrough.

## DETAILED DESCRIPTION OF THE INVENTION

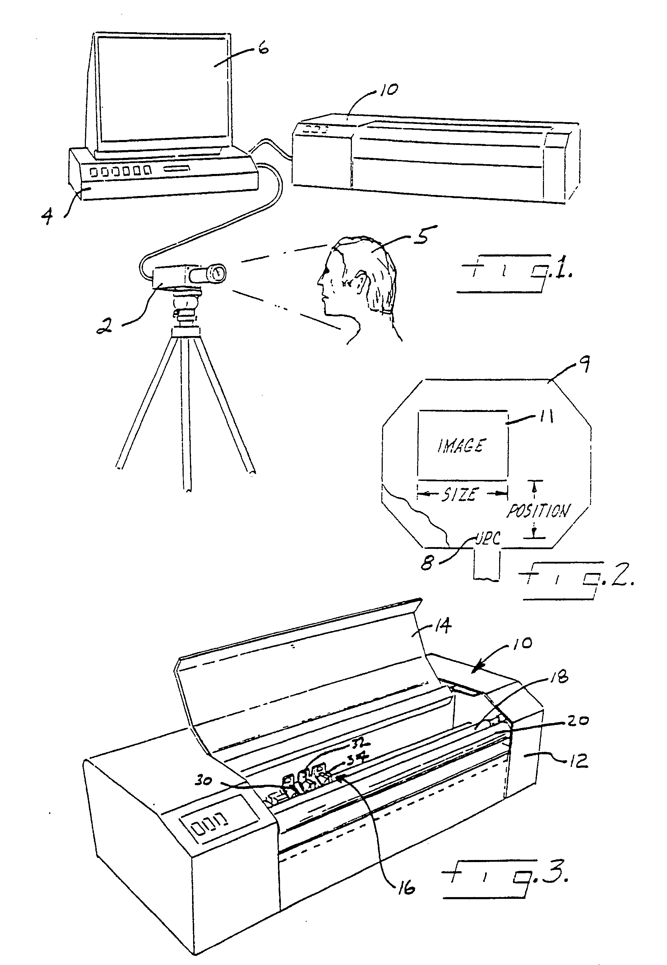

Figure 1 shows the basic components of an imaging system for printing processed color images on balloons made of polyester sheet material. The system includes a color video camera 2 which is linked to a computer 4. The computer produces an electronic image on the basis of a subject 5, and displays the image on the color video monitor 6. The computer is also linked to a printer 10, which prints the image which has been captured by the camera 2 and displayed by the monitor 6.

Figure 2 is a schematic view of a balloon 9 which has been coded with information to facilitate the printing of an image thereon. As will be discussed below, an optical reader carried by the printhead 16 reads information coded in the Uniform Product Code (U.P.C.) label 8 to properly position the image 11 on the balloon 9.

Figure 3 is a perspective view of a printer 10 with its housing 12 and cover 14 in the open position. Inside the printer, a printhead 16 is mounted adjacent to a small roller 18 which is parallel to a large roller 20.

Figures 4, 5 and 6 show the internal operations of the printer 10. Figures 4 and 5 are particularly directed to the printhead assembly 16. Figure 6 shows the overall arrangement of drive mechanisms for the rollers 18 and 20, and for the printhead assembly 16. Motor 22 drives the timing belt 24, which in turn engages the enlarged wheel 26. The wheel 26 is concentric with and rotationally fixed to the end of the small roller 18. The small roller 18 supports a substrate upon which ink, carried by the cartridges 30, 32 and 34, is to be deposited.

The large roller 20 freely rotates within two matching slots, one of which is shown at 21 in Figure 6. The slot 21 has an L-shaped configuration, the vertical portion 23 of which provides a stable loading position for the roller 20.

The printhead assembly 16 is comprised of a cover plate 36 which has a downwardly depending rear portion 38, and a series of three slightly upwardly angled fingers 40 which extend in the forward direction (to the right in Figures 4, 5 and 6). The cover plate 36 lies on top of a carriage base 42, to which the cartridge support frame 44 is attached. End plate 46 and optical reader support 48 are held firmly in engagement with the frame 44 by a fastener 50. Similarly, the frame 44 is firmly attached to the carriage base 42 by fasteners 52, which are countersunk into the front face of the front wall 54 of the frame. The end wall 47 is similar to the end wall 46, except that there is no optical reader station attached thereto. The intermediate walls 56, together with the end walls 46 and 47, define cartridge support stations 31, 33 and 35. Each station is equipped with a cartridge clip 58 which holds the cartridges 30, 32 and 34 in firm engagement with the front wall 54.

Each clip has a pair of ears 59, which can be seen in Figures 4 and 6. The ears are small outward protrusions which engage the upper edges of the walls of each station to prevent the clips from being vibrated out of their upper position. When the clips 58 are in their down position, as shown in dotted lines in Figure 6, the ears 59 snap into holes 61 of the station walls to hold the clip in the down position. By providing the clips with ears and the respective points of engagement, the reliability of the clips is enhanced, as compared to clips which rely entirely on friction.

It should be noted that the cartridge frame 44, including the front wall and intermediate walls 56, is made from a single piece of machined aluminum in order to provide dimensional stability to the cartridge support stations. The repeatability of positioning the cartridges is extremely important. The replacement of a cartridge should not affect the ability to position each cartridge at a particular location in order to achieve a color which is a mixture of the ink from different cartridges. Each cartridge contains a different color; cartridge 30 contains yellow ink, while cartridges 32 and 34 contain magenta and cyan, respectively. The ability to produce processed color images with acceptable color resolution will depend largely on the ability to reposition the respective cartridges which are required to create a particular color.

As can be seen from Figures 3 and 4, the carriage base 42 rides on and closely fits over the rail 60. The rail 60 is a hard anodized aluminum wear pad mounted to a metal channel 62. The channel 62 is attached and supported at its ends to the base of the printer 10. The carriage base 42 has a longitudinal opening 64 which is shaped to closely fit over the rail 60. The close fitting relationship between the opening 64 and the carriage base 42 and the rail further contribute to the repeatable positioning of the cartridges 30, 32 and 34 when they are in their respective cartridge support stations 31, 33 and 35, respectively. The carriage base 42 and rail 60 are preferably made of hard plastic and hard anodized aluminum, respectively, each having a low co-efficient of friction so that the printhead assembly 16 can move smoothly along the rail 60. As can best be seen in Figure 5, guide blocks 66 and 68 provide further support to the printhead assembly by engaging the underside of the channel 62. The blocks 66 and 68 should also be made of hard plastic. The blocks 66 and 68 are carried by a carriage bracket 65, which is fastened to the carriage base 42. The base 42, bracket 65 and blocks 66 and 68 combine to form a generally C-shaped sub-assembly which engages and is guided by the rail 60.

As can be seen from Figures 4, 5 and 6, the carriage base 42 is equipped with passageways 70, 72 and 74, each of which corresponds to a cartridge support station. The passageways are intended to provide space for electronic circuitry, leading from each of the cartridges 30, 32 and 34. The circuitry is then shielded by the angled plate 38 which extends from the cover plate 36.

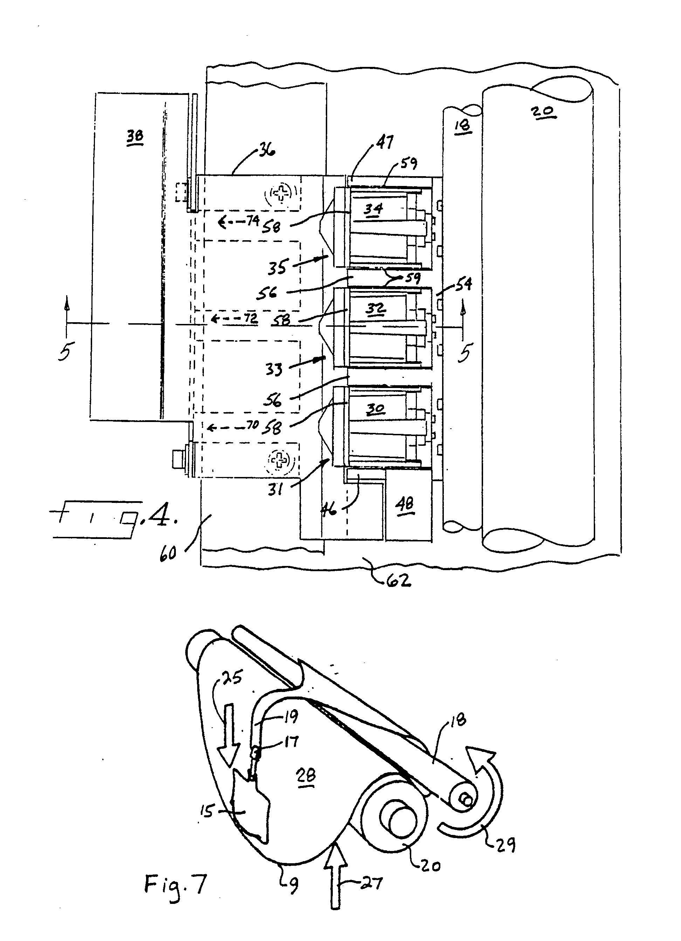

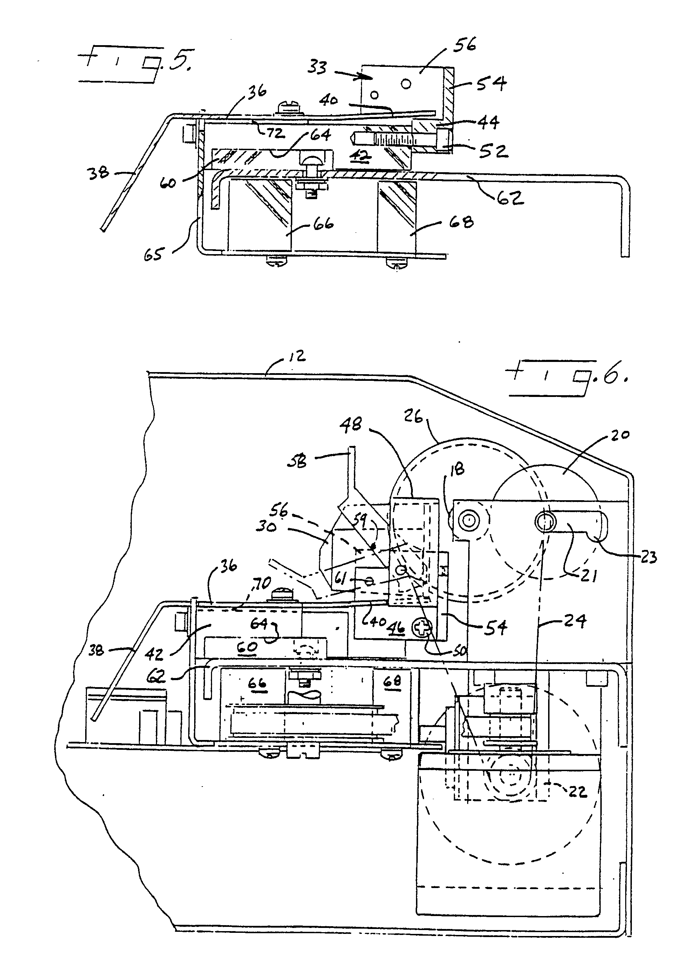

Figure 7 shows the two rollers 18 and 20 with a mylar balloon being fed through the mechanism. The mylar balloon 9 is fed over the idler roller 20 and around the drive roller 18. A weight 15 is clamped by a clip 17 to the tab 19 of the balloon to provide a constant force on it while it is being transported through the printing station. The drive roller rotation is controlled by a motor that meters the balloon motion. The balloon 9 should always be handled by its tab or stem 19. The balloons 9 have one side 23 which is coated so that it is white. The white coating layer acts as a primer to receive an inked color image, and provide a colorless background on which to print. The coated side 28 of a balloon should not be touched before printing, as residual finger oils may spoil the printed picture. With the cover open, the idler roller 20 is separated from the smaller roller until it stops. During the separation of the rollers the axis of the idler roller 20 is shifted or translated toward the front of the printer, while the axis of the smaller drive roller 18 is fixed. With the white side down and the stem at the top, top portion of the balloon is laid over the idler roller. The balloon should be centered from left to right on the rollers. The stem 19 is pushed under the drive roller so that it wraps around it. The stem 19 is then pulled back towards the front of the printer so that the white side 27 of the balloon is convexly disposed opposite the cartridge. Initially, only the beginning portion of the balloon should be wrapped through the rollers. Only the stem and the first 4 inches of the balloon should extend over the small roller back towards the front of the printer. The idler roller 20 is then translated back into its position adjacent the drive roller 18 to sandwich the balloon between the two rollers. While pulling the balloon taut, the weight bag 15 is clipped on to the end of the stem 19, making sure to get a good "bite" with the clip 17. The weight bag 15 should hang over the front of the printer and have an unobstructed path to the floor. (There should be no table edge, chair, etc. to stop the weight bag from pulling down.) In Figure 7, the arrow 25 shows the downward direction of the weight bag 15 and the printed portion of the balloon 9. The arrow 27 slows the upward movement of the unprinted portion of the balloon. The arrow 29 slows the direction of rotation of the feed roller 18.

An important aspect of the present invention is the cooperation between the optical reader, which is mounted in the optical reader support station 48, and a U.P.C. label 8, carried by a substrate. Figure 2 shows an example of a substrate carrying a U.P.C. label 8. The substrate shown in Figure 2 is a Mylar® balloon, which has not yet been inflated. The U.P.C. label 8 carries information which can be interpreted by an optical reader. The information which is incorporated into the U.P.C. label contains the usual price and manufacturer information. However, in addition to the usual information, the U.P.C. code contains image size and position information which can be used to instruct the printer to locate and dimension an image in a particular location on the balloon. For example, the computer 4 of the system shown in Figure 1 can be programmed to accept only the balloons of a particular group of manufacturers, whose U.P.C. codes will be read by the optical reader carried by the optical reader support 48. In addition, the computer 4 can be programmed so that when a particular manufacturer's code is identified, the printer will assume that the position of the U.P.C. code which has been read is located at a particular location on the balloon which has been inserted into the printer. For example, for a particular manufacturer it can be assumed that the U.P.C. label 8 is centrally located at a particular distance from the bottom edge of the balloon 9. Based on that information, the computer has a datum from which it can calculate where the image can be placed on the balloon 9 by the printer 10.

In addition to providing a system for giving the printer a starting point or datum from which to calculate the proper image position, the U.P.C. code can include an image size field. Since balloons come in various sizes ranging from about 6 inches in diameter to about 18 inches in diameter, the position and image size information may be cross-referenced and made dependent on the manufacturer code, or may be independent fields within the U.P.C. label, and not related to the manufacturer code.

The system of the present invention can be operated with great ease. An operator need not have significant training, and yet a wide variety of full processed color images can be produced. Furthermore, the cartridges which are used to deposit ink on substrates can be quickly and easily replaced. This means that the same unskilled operator of the system can maintain the machine by replacing ink cartridges as each color is depleted.

By using simple, individual ink cartridges, the cost of keep the system supplied with ink is minimized.

While a specific embodiment of the invention has been shown and described, it will be apparent to those skilled in the art that numerous alternatives, modifications, and variations of the embodiment shown can be made without departing from the spirit and scope of the appended claims.

## Claims

1. A printhead assembly comprising a carriage support frame having a plurality of at least three thermal ink jet cartridge support stations, said stations having a common front wall, an adjacent station having a side wall dividing said adjacent stations, said side wall being integral with said front wall.

2. A printhead assembly in accordance with claim 1 wherein:
said frame is made of a machined and anodized aluminum, and said side wall is formed from one piece with said front wall.

3. A printhead assembly in accordance with claim 1 further including:
a reading device support station carried by said frame, adjacent to said cartridge support stations.

4. A printhead assembly in accordance with claim 1 further including:
a carriage base with means for rigidly attaching said frame thereto, said carriage base including surface passageways for wiring leading to cartridges carried in said support stations.

5. A printhead assembly in accordance with claim 4 wherein:
a carriage bracket is carried by said carriage base, said bracket having at least one guide block attached thereto for cooperating with said carriage base, said carriage base and said carriage bracket being connected to form a generally C-shaped subassembly, said assembly further including a rail which engages and guides said C-shaped subassembly such that said carriage base is free to move in only one direction.

6. A printhead assembly in accordance with claim 5 wherein:
said rail is a wear pad made of hard anodised aluminum, and said guide block and said carriage base is made of plastic.

7. A printhead assembly in accordance with claim 4 wherein:
said assembly includes a plate overlying said carriage base, said plate including means for supporting said cartridges preparatory to attachment of said cartridge to said frame, said plate further cooperating with said base to from conduits for electrical circuitry leading to said stations.

8. A printhead assembly in accordance with claim 1 wherein:
each support station includes a cartridge clip for firmly holding a cartridge in abutting relationship to said frame.

9. A color printing system comprising at least three individually removable thermal ink jet cartridges carried by a moveable frame, each cartridge carrying ink of a single basic color, control means for selectively controlling emission of said ink from said cartridges, and coordinating deposition of said ink from each of said cartridges to form various combinations of colors.

10. A color printing system in accordance with claim 9 wherein:
said frame carries reading means for reading information carried by a substrate on which said ink is to be deposited.

11. A color printing system in accordance with claim 10 wherein:
said control means cooperates with said reading means to position said frame and said cartridges relative to said substrate on the basis of said information.

12. A color printing system in accordance with claim 11 wherein:
said system includes a substrate with machine readable information which can be used with information in said control means to determine at least one of the following kinds of information:
a) size of said substrate;
b) shape of said substrate;
c) price for printing on said substrate;
d) location of a centerline of said substrate;
e) manufacturer of said substrate.

13. A color printing system in accordance with claim 9 wherein:
said system includes tensioning means for maintaining generally constant tension on a substrate being fed adjacent to said cartridge.

14. A system in accordance with claim 13 wherein said tensioning means is a weight with means for attaching said weight to a substrate.

15. A substrate for use in a printing system, said substrate including indicia means, said indicia means being machine readable and being combineable with information in a printer to determine at least one of the following kinds of information:
a) size of said substrate;
b) shape of said substrate;
c) price for printing an image on said substrate;
d) location of a datum for proper location of an image on said substrate;
e) manufacturer of said substrate.

16. A substrate in accordance with claim 13 wherein:
said information indicia is positioned on said substrate such that such information may be used to properly locate an image on said substrate.

17. A substrate in accordance with claim 13 wherein:

said information indicia may be used to properly size an image to be depositioned on said substrate.

18. A feeding mechanism for a printer comprising a pair of rollers each being mounted to end supports so as to be rotatable about its axis, one of said rollers being a drive roller and the other being an idler roller, said idler roller being mounted in slot means to allow translation of said idler roller, said slot means including retention means at an end of said slot means nearer to said drive roller for stabilizing said idler roller in a position adjacent to said drive roller.

19. A feeding mechanism for a printer in accordance with claim 18 wherein said drive roller is substantially smaller in diameter than said idler roller, and said slot means is an L-shaped slot, a vertical downwardly extending portion of said L-shaped slot being said retention means.

20. A method of feeding a flaccid element through a printing station, said printing station having a pair of rollers mounted generally parallel to one another, a first of said rollers being translationally fixed, and a second of said rollers being translatable to first and second positions, said first position being one in which said rollers are separated, said second position being one in which said rollers are adjacent, said method comprising the steps of:

-- separating said rollers by moving said rollers to said first position,

-- placing said element on said translatable roller with the side of said element to be printed facing said translatable roller,

-- feeding a portion of said element around said fixed roller so that said side to be printed is facing convexly,

-- moving said rollers to said second position,

-- attaching a weight to said element so that said element is maintained in a generally constant tensioned state as it is fed through said rollers.

Fig.1.

IMAGE

SIZE

POSITION

UPC

8

9

11

Fig.2.

Fig.3.

Fig.4.

Fig.7

Fig.5.

Fig.6.